# EUROPEAN PATENT SPECIFICATION

(11) **EP 1 513 431 B1**
(45) Date of publication and mention of the grant of the patent: **08.03.2006**
(21) Application number: 03732669.1
(22) Date of filing: 27.05.2003
(51) Int. Cl.: A47G 21/14

(54) **A KNIFE BLOCK**
MESSERBLOCK
BLOC PORTE-COUTEAUX

(30) Priority: 28.05.2002 GB 0212295
(43) Date of publication of application: 16.03.2005
(73) Proprietor: Green Star (Moulding) Ltd., London N8 9PF (GB)
(72) Inventor: PREISTMAN, Paul, BOA (UK) Limited, New Addington, Croydon CR0 9UG (GB); CASEY, Caroline, BOA (UK) Limited, New Addington, Croydon CR0 9UG (GB); PARKER, Chris, BOA (UK) Limited, New Addington, CroydonCR0 9UG (GB)
(74) Representative: Ertl, Nicholas Justin
(86) International application number: PCT/GB2003/002296
(87) International publication number: WO 2003/099081

(56) References cited:
- EP-A- 0 381 815
- EP-A- 0 438 969
- DE-A- 4 118 671
- DE-U- 8 913 988
- DE-U- 9 012 253
- DE-U- 9 216 687
- DE-U- 20 019 905
- DE-U- 29 501 365

## Description

This invention relates to a knife block.

Various different designs of knife block are available. Most commonly, a knife block comprises a solid block of material through which a number of slots extend which are for receiving knife blades. The slots are sufficiently narrow that the handle of a knife comes to rest on the top surface of the knife block, with the blades protected by the block.
It is not easy to determine when the slots need cleaning as they are not easily seen, and this type of arrangement is in any case difficult to clean.
Other knife block arrangements support the knife blade over a much shorter length near the handle so that the block is much more easily cleaned. However, the remainder of the blade is then exposed.
DE -U-90 12 253 discloses a knife block which is formed from sections butted together. Spaces are defined between the flat face of one section and a recess in an adjacent section. The sections can be separated. DE-U-200 19 905 discloses another knife block which is formed from sections connected together. These sections interlock using dovetail type joints.

According to the invention, there is provided a knife block comprising first and second lateral halves, the two lateral halves being releasably connected together, wherein a plurality of spaces are defined between the inner surfaces of the first and second halves when connected together, each for receiving a knife blade,
wherein each lateral half has an inner profile which comprises a plurality of laterally extending projections along its length, the two halves being releasably connected together such that the projections of the first half extend into the spaces between the projections of the second half, and the projections of the second half extend into the spaces between the projections of the first half.

This arrangement uses two halves which can be separated to enable the inner surfaces to be cleaned. These inner surfaces define the knife blade slots, in particular because when the two halves are connected together, there is not contact over the full inner surfaces. Instead, a set of spaces is defined for the knife blades. The two halves thus interlock, which makes the connection of the two halves together an easy and intuitive operation.
The spaces may extend laterally, so that they are defined above and below the lateral projections.
Preferably, each lateral half has a constant cross section perpendicular to its length. This simplifies the manufacture of the block, as each half can be extruded or else easily machined. Each lateral half may have the same cross section, so that both halves can be obtained from the same extrusion.
In one example, the outer shape of each half, viewed from the side, is a quadrilateral symmetrical about a line perpendicular to the length. This enables both halves to be made from the same extrusion (or machined length) with no waste.
The lateral halves are preferably releasably connected together by a magnet arrangement. For example this may comprise a first plurality of magnets in one lateral half which co-operate with a second plurality of magnets in the other lateral half, and wherein for each pair of co-operating magnets, one is recessed and the other is proud. This arrangement provides fixed location of the two lateral halves relative to each other.

Examples of the invention will now be described in detail with reference to the accompanying drawings, in which:
Figure 1 shows a first example of knife block of the invention;
Figure 2 shows a view of the knife receiving surface of the knife block of Figure 1;
Figure 3 shows a second example of knife block of the invention;
Figure 4 shows a view of the knife receiving surface of the knife block of Figure 3;
Figure 5 shows how both lateral halves of the knife block of Figures 2 and 3 can be made from a single length with no waste; and
Figure 6 is used to show in greater detail a magnet arrangement in the knife block of Figures 3 and 4;
Figure 7 shows a third example of knife block of the invention.

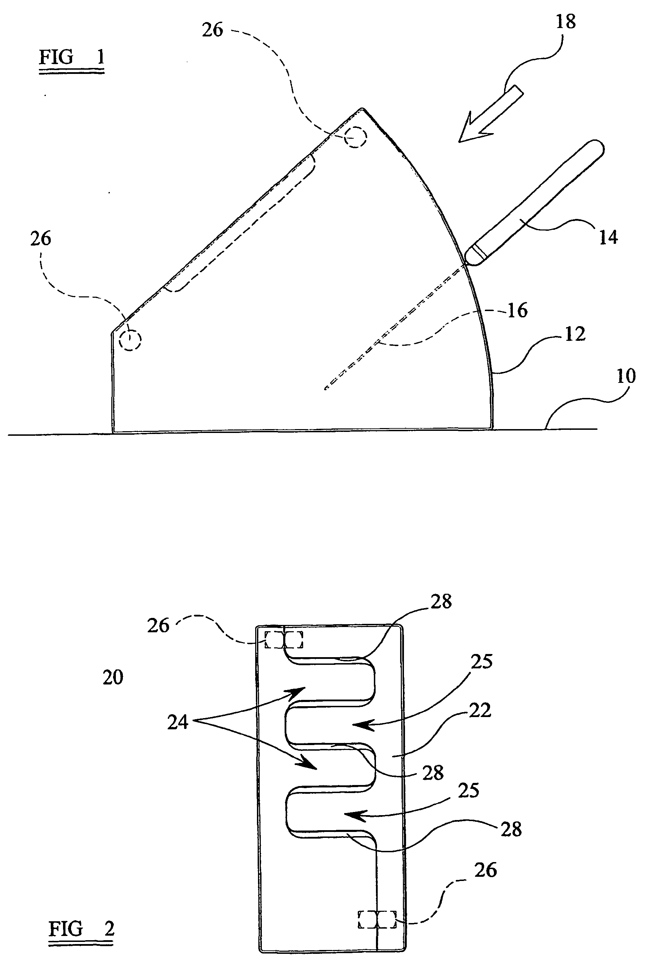

Figure 1 shows a first example of knife block of the invention, viewed from the side. The block is designed to stand on a surface 10, and the blades are received in the block in slots. The blades are inserted into slots in a front face 12, and these slots extend into the block in a direction which will be referred to in this description as a "length" direction. One knife is shown schematically in Figure 1, with the handle 14 resting against the front face, and the blade 16 received in a slot in the block. In this example, the knife blade is inserted flat, as will become apparent from the following.

Figure 2 shows the end face, as viewed in the direction of arrow 18 in Figure 1, namely viewing along the length of the knife block. This view shows that the block is made from first and second lateral halves 20, 22. Each lateral half has an inner profile which comprises a plurality of laterally extending projections, 24 (left half) and 25 (right half). The projections 24 run along the full length of each lateral half, right through to the base of the knife block, or the rear wall, as the case may be.

The projections 24 of the left half extend into the spaces between the projections 25 of the right half, and the projections 25 of the right half extend into the spaces between the projections 24 of the left half. Thus, an interlocking comb-like structure is formed. However, spaces 28 are defined between the two halves when connected together, each for receiving a knife blade.

The two lateral halves are releasably connectable together by a mechanism 26 shown in hidden detail in Figure 2. This arrangement thus uses two halves which can be separated to enable the inner surfaces to be cleaned. These inner surfaces define the knife blade slots, as shown.

In the example of Figures 1 and 2, the spaces 28 extend across the width of the knife block, and are defined above and below the projections 24,25. The knife blades are therefore retained in a flat orientation as shown in Figure 1. The two halves in Figure 2 are designed to a number of different length slots, by having different lateral projection heights. The blades are, however, maintain close to centred.

The lateral halves 20, 22 have a constant cross section along their length. Each half can thus be extruded or easily machined, for example from wood.

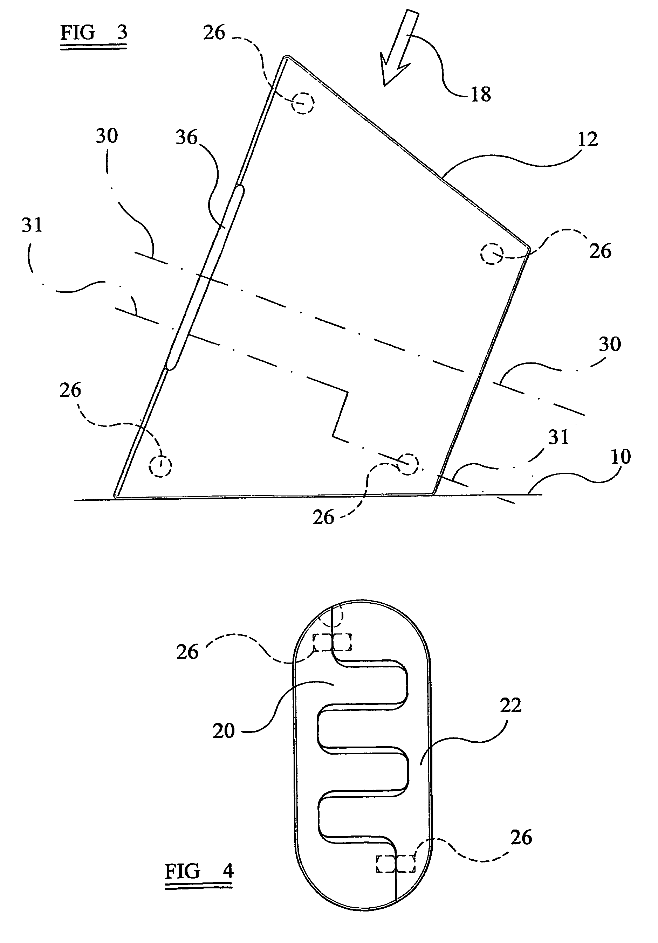

Figures 3 and 4 shows a second example, in which each lateral half has the same cross section, so that both halves can be obtained from the same extrusion, or from the same machined length of wood or other material.

As shown in Figure 4, which is again the front face 12 viewed in the direction of arrow 18, the front face (and thus the cross section along the length of the block) has 180 degree rotational symmetry. This symmetry enables both halves to have identical cross sections. As in the example of Figures 1 and 2, the knife slots are defined above and below the projections so that the knifes are inserted with the blades flat.

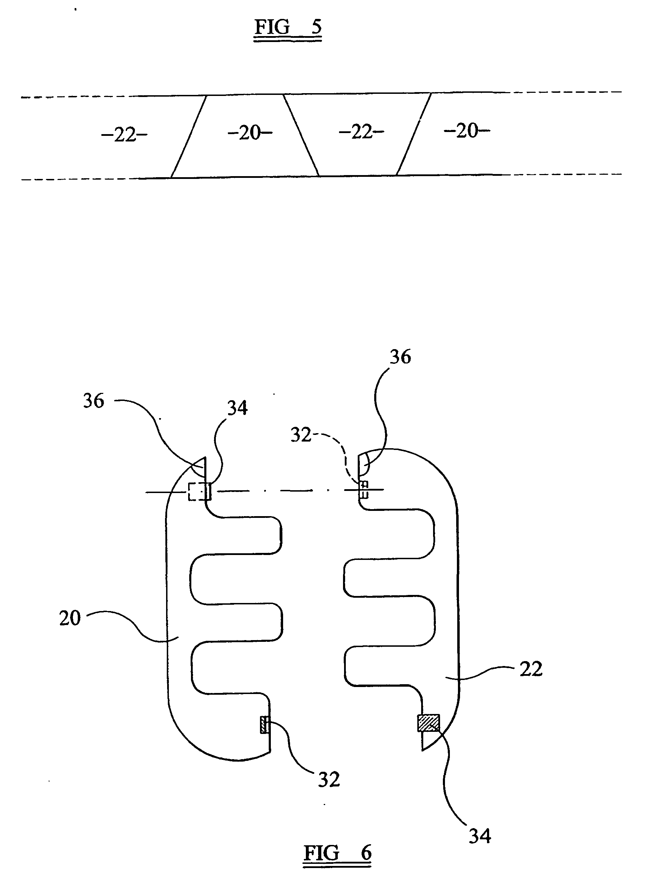

As can be seen from Figure 3, the outer shape of each half, viewed from the side, is a trapezium symmetrical about a line 30 perpendicular to the length. This enables both halves to be made from the same extrusion (or machined length) with no waste, as shown schematically in Figure 5. The same can of course be achieved with a rectangular side, but the trapezium provides a desired angle of insertion for the knives.

Even if the outer trapezium shape is not symmetrical, it is still be possible to form the blocks from a single extrusion or length without waste, by defining a left handed and a right handed knife block.

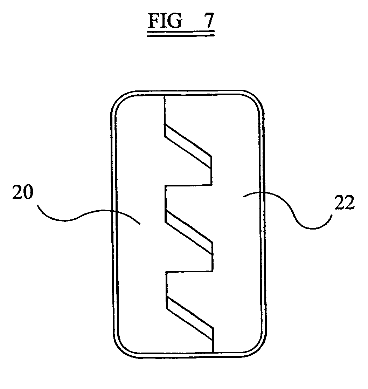

Although any form of latching arrangement may be used, in a preferred arrangement, the lateral halves are releasably connectable together by a magnet arrangement. Figure 6 shows a cross section through the two lateral halves 20,22 along the line 31 in Figure 3 (but with the halves separated). The two halves have magnets in co-operating pairs 26, and these are positioned in four corners as shown in Figure 3. The cross section of Figure 6 passes through one magnet pair.

For each pair of co-operating magnets, one of them 32 is recessed and the other 34 is proud. Coupling of a pair of magnets thus provides fixed positioning of the two halves relative to each other. The magnets are preferably rare earth magnets, which have suitable strength with a small volume. The outer surfaces of the two halves become flush when they are coupled together, and to enable easy separation of the two halves, a recess is provided somewhere along the mating surfaces. The cross section of Figure 6 passes through this finger recess 36.

In the two examples above, the knives are inserted with the blades flat, but this is not essential. Figure 7 shows one possible arrangement of the lateral halves 20,22 in which the knives are inserted diagonally, and in which the lateral halves again have identical cross sections.

The blades may even be parallel to the connection face between the two halves. Essentially, the invention provides a design in which the separation of the two halves opens up the blade cavities so that they may easily be cleaned.

In the examples above, a series of projections in each half interlock with grooves in the opposite half. This makes joining the halves together easy, as they may be slid against each other (parallel to arrow 18 in Figure 1) if the alignment is not initially correct. This sliding movement will bring the magnets into alignment when the two halves are in the correct relative positions, which will then retain the knife block together. This is, however, not essential. For example, the slots may not run through the full length of the knife block, in which case relative sliding will not be possible, as the cross sections of the two halves would not then be constant along the full length.

The knife block can be made from any suitable extrudable material or preferably of wood. Different woods may also be used and a knife block may have lateral halves made from different woods, for aesthetic reasons. Indeed, the lateral halves may be sold independently, so that a user may choose the material and colour of each half when purchasing the knife block.

It should be noted that the term "constant cross section" is intended to cover the arrangements of Figures 1 and 3. Thus, looking in the direction of arrow 18 a fixed shape is seen, and the two halves can be slid relatively to each other. As the side views are not rectangular, the cross section in each design does not end abruptly, but the cross section is nevertheless "constant" as used in this description and claims. In particular, the half can be cut out from a length of material which itself has a constant cross section, and can therefore easily be machined or extruded.

Although extrusion and machining of the halves are mentioned above, they could equally be moulded.

Various other modifications will be apparent to those skilled in the art.

## Claims

1. A knife block comprising first and second lateral halves (20,22), the two lateral halves being releasably connected together, wherein a plurality of spaces (28) are defined between the inner surfaces of the first and second halves when connected together, each for receiving a knife blade, wherein each lateral half (20,22) has an inner profile which comprises a plurality of laterally extending projections (24,25) along its length, the two halves being releasably connected together such that the projections (24) of the first half (20) extend into the spaces between the projections (25) of the second half (22), and the projections (25) of the second half (22) extend into the spaces between the projections (24) of the first half (20).

2. A knife block as claimed in claim 1, wherein the spaces extend laterally.

3. A knife block as claimed in claim 1 or 2, wherein each lateral half has a constant cross section perpendicular to the knife insertion direction (18).

4. A knife block as claimed in claim 3, wherein each lateral half (20,22) has the same cross section.

5. A knife block as claimed in claim 4, wherein the outer shape of each half (20,22), viewed from the side is a quadrilateral symmetrical about a line (30) perpendicular to the length.

6. A knife block as claimed in any preceding claim, wherein the lateral halves (20,22) are releasably connected together by a magnet arrangement (26).

7. A knife block as claimed in claim 6, wherein the magnet arrangement comprises a first plurality of magnets (32,34) in one lateral half which co-operate with a second plurality of magnets (32,34) in the other lateral half, and wherein for each pair of co-operating magnets, one (32) is provided recessed and the other (34) is proud.

8. A knife block as claimed in claim 7, wherein the magnets (32,34) each comprise rare earth magnets.

9. A knife block as claimed in any preceding claim, wherein at least one lateral half (20,22) is provided with a finger recess portion (36) to enable separation of the two halves.

## Patentansprüche

1. Ein Messerblock, der eine erste und eine zweite laterale Hälfte (20, 22) aufweist, wobei die zwei lateralen Hälften lösbar miteinander verbunden sind, wobei eine Mehrzahl von Räumen (28) zwischen den Innenoberflächen der ersten und zweiten Hälfte definiert ist, wenn dieselben miteinander verbunden sind, jeder zum Aufnehmen eines Messerblatts, wobei jede laterale Hälfte (20, 22) ein Innenprofil aufweist, das eine Mehrzahl von sich lateral erstreckenden Vorsprüngen (24, 25) entlang seiner Länge aufweist, wobei die zwei Hälften lösbar miteinander derart verbunden sind, dass die Vorsprünge (24) der ersten Hälfte (20) sich in die Räume zwischen den Vorsprüngen (25) der zweiten Hälfte (22) erstrecken, und die Vorsprünge (25) der zweiten Hälfte (22) sich in die Räume zwischen den Vorsprüngen (24) der ersten Hälfte (20) erstrecken.

2. Ein Messerblock gemäß Anspruch 1, bei dem sich die Räume lateral erstrecken.

3. Ein Messerblock gemäß Anspruch 1 oder 2, bei dem jede laterale Hälfte einen konstanten Querschnitt senkrecht zu der Messereinfügerichtung (18) aufweist.

4. Ein Messerblock gemäß Anspruch 3, bei dem jede laterale Hälfte (20, 22) denselben Querschnitt aufweist.

5. Ein Messerblock gemäß Anspruch 4, bei dem die äußere Form jeder Hälfte (20, 22) betrachtet von der Seite vierseitig symmetrisch um eine Linie (30) senkrecht zu der Länge ist.

6. Ein Messerblock gemäß einem der vorhergehenden Ansprüche, bei dem die lateralen Hälften (20, 22) lösbar miteinander durch eine Magnetanordnung (26) verbunden sind.

7. Ein Messerblock gemäß Anspruch 6, bei dem die Magnetanordnung eine erste Mehrzahl von Magneten (32, 34) in einer lateralen Hälfte aufweist, die mit einer zweiten Mehrzahl von Magneten (32, 34) in der anderen lateralen Hälfte zusammenarbeiten, und bei dem für jedes Paar von zusammenarbeitenden Magneten der eine (32) ausgespart und der andere (34) hervorstehend vorgesehen ist.

8. Ein Messerblock gemäß Anspruch 7, bei dem die Magneten (32, 34) jeweils Seltenerdmagneten aufweisen.

9. Ein Messerblock gemäß einem der vorhergehenden Ansprüche, bei dem zumindest eine laterale Hälfte (20, 22) mit einem Fingerausnehmungsabschnitt (36) versehen ist, um eine Trennung der zwei Hälften zu ermöglichen.

## Revendications

1. Bloc porte-couteaux comportant une première et une seconde moitiés latérales (20, 22), les deux moitiés latérales étant reliées l'une à l'autre de manière démontable, dans lequel une pluralité d'espaces (28) sont définis entre les surfaces internes de la première et de la seconde moitiés lorsqu'elles sont reliées l'une à l'autre, chacun pour recevoir une lame de couteau, dans lequel chaque moitié latérale (20, 22) possède un profil interne qui comporte une pluralité de parties saillantes (24, 25) s'étendant latéralement selon sa longueur, les deux moitiés étant reliées l'une à l'autre de manière démontable de façon que les parties saillantes (24) de la première moitié (20) s'étendent dans les espaces entre les parties saillantes (25) de la seconde moitié (22), et que les parties saillantes (25) de la seconde moitié (22) s'étendent dans les espaces entre les parties saillantes (24) de la première moitié (20).

2. Bloc porte-couteaux selon la revendication 1, dans lequel les espaces s'étendent latéralement.

3. Bloc porte-couteaux selon l'une des revendications 1 ou 2, dans lequel chaque moitié latérale a une section transversale constante perpendiculaire à la direction (18) d'insertion d'un couteau.

4. Bloc porte-couteaux selon la revendication 3, dans lequel chaque moitié latérale (20, 22) a la même section transversale.

5. Bloc porte-couteaux selon la revendication 4, dans lequel la forme extérieure de chaque moitié latérale (20, 22), vue depuis le côté, est un quadrilatère symétrique selon une ligne (30) perpendiculaire à la longueur.

6. Bloc porte-couteaux selon l'une quelconque des revendications précédentes, dans lequel les moitiés latérales (20, 22) sont reliées ensemble de manière démontable par un agencement d'aimants (26).

7. Bloc porte-couteaux selon la revendication 6, dans lequel l'agencement d'aimants comporte une première pluralité d'aimants (32, 34) dans une moitié latérale qui coopère avec une seconde pluralité d'aimants (32, 34) dans l'autre moitié latérale, et dans lequel pour chaque paire d'aimants coopérants entre eux, un (32) est agencé en retrait et l'autre (34) est saillant.

8. Bloc porte-couteaux selon la revendication 7, dans lequel les aimants (32, 34) comportent chacun un aimant en terres rares.

9. Bloc porte-couteaux selon l'une quelconque des revendications précédentes, dans lequel au moins une moitié latérale (20, 22) comporte une portion (36) creusée pour un doigt pour permettre la séparation des deux moitiés.
